# EUROPÄISCHE PATENTSCHRIFT

(11) **EP 0 593 605 B1**
(45) Veröffentlichungstag und Bekanntmachung des Hinweises auf die Patenterteilung: **26.11.1997**
(21) Anmeldenummer: 92914886.4
(22) Anmeldetag: 09.07.1992
(51) Int. Cl.: C08B 35/02, C08B 31/04

(54) **VERFAHREN ZUR HERSTELLUNG VON STÄRKEESTERN FÜR KLINISCHE, INSBESONDERE PARENTERALE ANWENDUNG**
METHOD OF PREPARING STARCH ESTERS FOR CLINICAL, IN PARTICULAR PARENTERAL, APPLICATIONS
PROCEDE DE PRODUCTION D'ESTERS D'AMIDON POUR APPLICATIONS CLINIQUES, NOTAMMENT PARENTERALES

(30) Priorität: 11.07.1991 DE 4123000
(43) Veröffentlichungstag der Anmeldung: 27.04.1994
(73) Patentinhaber: Laevosan-Gesellschaft m.b.H., A-4020 Linz (AT)
(72) Erfinder: FÖRSTER, Harald, D-6000 Frankfurt/Main 71 (DE); ASSKALI, Fatima, D-6000 Frankfurt/Main 71 (DE); NITSCH, Ernst, A-4040 Linz (AT)
(74) Vertreter: Huber, Bernhard, Dipl.-Chem.
(86) Internationale Anmeldenummer: EP9201553
(87) Internationale Veröffentlichungsnummer: WO9301217

(56) Entgegenhaltungen:
- GB-A- 1 476 057
- US-A- 2 362 282
- US-A- 3 639 389

## Beschreibung

Die Erfindung betrifft ein Verfahren zur Herstellung wasserlöslicher, physiologisch verträglicher Stärkeesterzusammensetzungen für klinische, insbesondere parenterale Anwendungen.

Für Infusionslösungen, als Plasmaersatzmittel, zur Hämodilution oder in Lösungen für die Peritonealdialyse, sowie für die Sonderernährung besteht ein großer Bedarf an wasserlöslichen, biokompatiblen Polymeren. Bisher wurde für solche Zwecke insbesondere Gelatine, Gelatinederivate, Dextran und Hydroxyethylstärke eingesetzt (vgl. z.B. US-A-3937821; DE-A-3313600; Römpp's Chemie Lexikon, 9. Aufl., Seite 919 und 1509).

Zur Zeit werden zur klinischen Verwendung, insbesondere für Plasmaersatzlösungen, vorwiegend die Polysaccharide Dextran und Hydroxyethylstärke eingesetzt. Der wesentliche Nachteil von Dextran ist, daß aufgrund des Vorhandenseins von preformierten Antikörpern anaphylaktische Reaktionen auftreten können, die die Anwendung dieser Substanz gefährlich machen oder sie durch eine zwingende Vorbehandlung mit einem neutralisierenden niedermolekularen Hapten komplizieren. Bei einer kurzzeitigen, unmittelbaren Anwendung von Hydroxyethylstärke wurden zwar nur selten unmittelbare Nebenwirkungen beobachtet; die längerdauernde Anwendung von Hydroxyethylstärke wird jedoch durch deren Speicherung, insbesondere im retikuloendothelialen Gewebe, stark eingeschränkt. Die Hydroxyethylstärke kann durch körpereigene Enzyme nur langsam bzw. unvollständig abgebaut werden, weil die Veretherung den Angriff körpereigener Glycosidasen erschwert. Es ist zwar bisher noch nicht mit Sicherheit bekannt, ob diese Speicherung die Funktionsfähigkeit des retikuloendothelialen Systems beeinträchtigt, doch wird z.B. das Auftreten von Juckreiz als Nebenwirkung, die bei der Anwendung von Hydroxyethylstärke zu beobachten ist, mit dieser Speicherung in Zusammenhang gebracht. Neuerdings wurde auch die Verwendung von Stärkeestern mit niederen aliphatischen Mono- oder Dicarbonsäuren, insbesondere von Acetylstärke, vorgeschlagen, deren Vorteil gegenüber den vorstehend genannten Substanzen vor allem in der fehlenden Antigenität und der vollständigen Ausscheidbarkeit bzw. Metabolisierbarkeit besteht.

Ein für klinische, insbesondere parenterale Anwendungen bestimmtes Polymer muß neben einer guten Wasserlöslichkeit auch noch den folgenden Anforderungen entsprechen:
- Die Lösung des Polymers soll bei therapeutisch angewandten Konzentrationen eine Viskosität aufweisen, die nicht höher als die des Plasmas ist;
- Die Substanz soll eine dem jeweiligen Einsatzzweck angepaßte Verweildauer im Organismus haben und nach parenteraler Applikation vollständig abbaubar sein. Diese Forderung läßt sich bei Acylstärken über den Veresterungsgrad einstellen, weil mit steigender molarer Substitution eine Verlangsamung der Abbaubarkeit durch die körpereigene α-Amylase eintritt;
- Die Substanz darf keine Toxizität, Pyrogenität oder Antigenität aufweisen.

Die bisher bekannten Stärkeesterzusammensetzungen entsprechen nicht oder nicht allen diesen Anforderungen.

Für die Anwendung in Lebensmitteln wird Acetylstärke hoher Viskosität mit einem Acetylgehalt von maximal 2.5 %, entsprechend einer molaren Substitution (MS) von maximal 0.064 Mol/Mol verwendet. Solche Produkte sind wegen der kleisterartigen Beschaffenheit wäßriger Dispersionen und wegen des durch die niedrige molare Substitution bedingten raschen Abbaus für klinische Anwendungen nicht brauchbar. Acetylstärken geringer Viskosität mit niedrigem Molekulargewicht werden für das Schlichten von Textilien und für das Leimen von Papier verwendet; solche Produkte sind wegen ihrer niedrigen molaren Substitution, undefinierten Molekulargewichtsverteilung und geringen Reinheit für klinische Anwendungen ebenfalls ungeeignet (zum Stand der Technik vergleiche z.B. O.B. Wurzburg, Modified Starches, Properties and Uses, CRC Press Inc.; Boca Raton, Florida, 1986, Seite 55 bis 74).

Aus der US-A-2,362,282 ist ein Verfahren zur Herstellung von Acetylstärken bekannt, mit dem Stärkehydrolysate von niedrigem Dextroseäquivalentwert (D.E.) hergestellt werden sollen, die für Klebstoffe vorgesehen sind. Hierbei wird gleichzeitig eine Depolymerisation und Acetylierung durch Erhitzen in hochprozentiger Essigsäure durchgeführt. Diese Säurehydrolyse ist schwer steuerbar und das Endprodukt ist nicht physiologisch verträglich, u.a. aufgrund eines zu geringen Molekulargewichts.

Die GB-A-1 476 057 lehrt die Verwendung einer Stärkederivate enthaltenden Mischung zur Herstellung von Halspastillen. Als Stärkederivat wird dabei auch ein mit Vinylacetat verestertes Amylopektin aufgeführt, ohne Angaben über Herstellungsverfahren, Substitutionsgrad und Molekulargewicht. Für eine parenterale Anwendung ist ein solches Produkt ungeeignet.

Aus US-A-3 639 389 sind klar lösliche niedrig substituierte Stärkesirupe bekannt, die ausgehend von Stärkehydrolysaten mit einem D.E.-Wert von weniger als 30 hergestellt werden. Allein wegen der niedrigen Molekulargewichte sind solche Produkte schon für parenterale Anwendungen unbrauchbar.

Aufgabe der vorliegenden Erfindung ist es deshalb, für klinische, insbesondere parenterale Anwendungen geeignete wasserlösliche, physiologisch verträgliche Stärkeesterzusammensetzungen bereitzustellen, die die vorstehend genannten Nachteile von für solche Anwendungen bisher verwendeten Produkten vermeiden, und die insbesondere allen Anforderungen, die an Polymere für die klinische, insbesondere parenterale Anwendung gestellt werden, entsprechen. Diese Aufgabe wird mit der vorliegenden Erfindung gelöst.

Gegenstand der Erfindung ist ein Verfahren zur Herstellung wasserlöslicher, physiologisch verträglicher Stärkeesterzusammensetzungen, das dadurch gekennzeichnet ist, daß man eine Stärke durch Säurehydrolyse oder Enzymhydrolyse in ein Teilhydrolysat mit einem mittleren Molekulargewicht Mw im Bereich von 10000 bis 500000 Dalton überführt, dieses Teilhydrolysat in wäßriger Lösung mit dem Anhydrid oder Halogenid einer aliphatischen Monocarbonsäure mit 2 bis 4 Kohlenstoffatomen oder einer aliphatischen Dicarbonsäure mit 3 bis 6 Kohlenstoffatomen oder Gemischen davon und einem Alkalisierungsmittel bis zu einer molaren Substitution im Bereich von 0.1 bis 1.0 acyliert, und aus dem so erhaltenen Reaktionsgemisch die Salze entfernt.

Als Stärke wird erfindungsgemäß vorzugsweise eine Stärke verwendet, die aus praktisch amylosefreiem Amylopektin besteht, das nicht mehr als 1 Gew.-% Amylose enthält. Bevorzugte Beispiele für eine erfindungsgemäß eingesetzte Stärke sind Wachsmais-, Wachsreis- oder Wachssorghumstärke.

Die molekulare Struktur von Amylopektin entspricht weitgehend der des körpereigenen Glykogens, so daß keine Antigenität oder Toxizität zu erwarten ist. Nach Abspaltung der durch körpereigene Enzyme leicht hydrolysierbaren Acylgruppen ist das Restmolekül praktisch von Glykogen nicht unterscheidbar, und unterliegt dem gleichen Stoffwechsel.

Durch den nach dem erfindungsgemäßen Verfahren erfolgenden Teilabbau der Stärke ist es möglich, die Viskosität der therapeutisch einzusetzenden Lösungen in den erforderlichen Bereich zu bringen. Vorzugsweise wird die Stärke bis zu einem mittleren Molekulargewicht Mw im Bereich von 40000 bis 250000 Dalton hydrolysiert.

Die Hydrolyse kann auf an sich bekannte Weise mittels einer Säurehydrolyse oder einer Enzymhydrolyse erfolgen. Für die Säurehydrolyse werden vorzugsweise starke Mineralsäuren wie Salz- oder Schwefelsäure verwendet. Als Enzym für die Enzymhydrolyse wird α-Amylase bevorzugt. Es ist auch möglich, eine Säurehydrolyse mit einer Enzymhydrolyse zu kombinieren, und zwar in beliebiger Reihenfolge.

Der Hydrolysegrad kann leicht durch Messung der Viskosität einer mit Wasser verdünnten Probe kontrolliert werden, um auf diese Weise den gewünschten Abbau und das Ende der Hydrolysereaktion zu bestimmen.

In dem auf den hydrolytischen Abbau folgenden erfindungsgemäßen Verfahrensschritt wird die teilhydrolysierte Stärke in wäßriger Lösung mit dem Anhydrid oder Halogenid einer aliphatischen Monocarbonsäure mit 2 bis 4 Kohlenstoffatomen oder einer aliphatischen Dicarbonsäure mit 3 bis 6 Kohlenstoffatomen bis zu einer molaren Substitution im Bereich von 0.1 bis 1.0 Mol/Mol acyliert, wobei ein Bereich von 0.3 bis 0.7 Mol/Mol bevorzugt ist. Das hierfür verwendete Anhydrid oder Halogenid leitet sich von einer aliphatischen Monocarbonsäure mit 2 bis 4 Kohlenstoffatomen, oder einer aliphatischen Dicarbonsäure mit 3 bis 6 Kohlenstoffatomen ab. Aliphatische Monocarbonsäuren sind z.B. Buttersäure, Isobuttersäure, Propionsäure, und insbesondere Essigsäure. Die erfindungsgemäß eingesetzten aliphatischen Dicarbonsäuren mit 3 bis 6 Kohlenstoffatomen können gesättigt oder ungesättigt sein; vorzugsweise leiten sie sich von a, -Dicarbonsäuren ab, und sind z.B. Glutarsäure, Adipinsäure und insbesondere Bernsteinsäure und Maleinsäure. Als Halogenide werden die Chloride bevorzugt, aber Bromide und Jodide sind ebenfalls gut geeignet. Besonders bevorzugt wird erfindungsgemäß mit Acetylchlorid und insbesondere mit Essigsäureanhydrid gearbeitet.

Es kann auch ein Gemisch aus zwei oder mehreren der erfindungsgemäßen Mono- oder Dicarbonsäuren verwendet werden.

Die Acylierung erfolgt in Gegenwart eines alkalisierenden Mittels, wodurch gleichzeitig bildende Säuren neutralisiert werden. Als alkalisierende Mittel werden bevorzugt Alkali- und Erdalkalihydroxide, -carbonate oder -oxide verwendet und insbesondere Natriumhydroxid, Natriumcarbonat, Calciumhydroxid und/oder Magnesiumoxid.

Die Reaktionsbedingungen der Acylierung mit dem Säureanhydrid oder Säurehalogenid entsprechen den für derartige Acylierungen üblichen Bedingungen; die Reaktion wird vorzugsweise unter kräftigem Rühren und bei Raumtemperatur durchgeführt.

Die Entfernung der Salze aus dem nach der Acylierung erhaltenen Reaktionsgemisch erfolgt vorzugsweise mittels Dialyse, Ultrafiltration (Diafiltration) oder Ionenaustausch. Es können auch zwei oder mehrere gleiche oder verschiedene Entsalzungsverfahren hintereinander geschaltet werden.

Neben den Salzen werden auch andere niedermolekulare Bestandteile, wie niedermolekulare Abbauprodukte der Ausgangsstärke, zumindest weitgehend entfernt. Dies kann vor und/oder nach der Acylierungsstufe durch z.B. Dialyse und insbesondere durch Ultrafiltration (Diafiltration) erfolgen, wobei je nach der vorgesehenen Verwendung Membranen mit einer entsprechenden Ausschlußgrenze gewählt werden können. Zweckmäßigerweise erfolgt die Entfernung niedermolekularer Bestandteile zusammen mit der Entfernung der Salze nach der Acylierung. Je nach dem gewünschten Grad der Entfernung können zwei oder mehrere Reinigungsschritte hintereinander geschaltet werden.

Das nach der Hydrolyse erhaltene Reaktionsgemisch (Teilhydrolysat) und/oder insbesondere das nach der Entfernung der Salze und gegebenenfalls anderer niedermolekularer Bestandteile erhaltene Reaktionsgemisch wird vor der weiteren Verarbeitung oder Verwendung vorzugsweise einer Sterilfiltration unterzogen.

Die nach Entfernung der Salze und gegebenenfalls anderer niedermolekularer Bestandteile erhaltene Stärkeesterlösung kann als solche direkt verwendet werden; zur besseren Handhabbarkeit und Lagerfähigkeit wird die Stärkeesterlösung vorzugsweise in ein getrocknetes Produkt überführt. Dies erfolgt insbesondere durch schonende Konzentrierung der Lösung im Vakuum, und nachfolgende Trocknung im Vakuum. Es ist aber auch möglich, die Stärkeesterlösung durch Lyophilisation in ein gefriergetrocknetes Produkt überzuführen.

Aufgrund ihrer Eigenschaften, insbesondere der guten Wasserlöslichkeit und der physiologischen Verträglichkeit, eignen sich die nach dem erfindungsgemäßen Verfahren erhältlichen Stärkeesterzusammensetzungen sehr gut für klinische, insbesondere parenterale Anwendungen.

Erfindungsgemäße Stärkeesterzusammensetzungen werden insbesondere für die Herstellung pharmazeutischer Zusammensetzungen für die Peritonealdialyse verwendet, sowie zur Herstellung von Blutplasmaersatzmitteln (vgl. die deutsche Patentanmeldung P 41 22 999.1 "Metabolisierbarer Plasmaersatz" und die deutsche Patentanmeldung P 41 23 001.9 "Pharmazeutische Zusammensetzung für die Peritonealdialyse" der gleichen Anmelderin und mit dem gleichen Anmeldetag).

Die nachfolgenden Beispiele sollen die Erfindung näher erläutern. Wenn nicht anders angegeben, beziehen sich vor- und nachstehend angegebene Prozentangaben auf Gew.-% und Teile auf Gewichtsteile. Temperaturangaben beziehen sich auf die Celsius-Skala.

### Beispiele

### Beispiel 1

### Herstellung eines Wachsmaisstärke-Teilhydrolysates (Mw ca. 200000)

4000 g Wachsmaisstärke mit einem Wassergehalt von 10.0 %, entsprechend 3600 g wasserfreie Stärke, wurden in 12.5 kg entsalztem Wasser suspendiert, dann 3.85 g Calciumchlorid-Dihydrat und 1 g α-Amylase (Termamyl 60 L; Fa. NOVO, Kopenhagen) zugesetzt und unter Rühren rasch auf 95°C aufgeheizt. Die Stärke ging ohne Bildung einer hochviskosen Phase in Lösung. Es wurde solange bei 95°C gehalten, bis eine Probe, mit Wasser auf 20 % verdünnt, eine relative Viskosität von 1.5, bezogen auf Wasser bei 20°C, zeigte. Der Abbau wurde durch Zusatz von Salzsäure bis auf einen pH-Wert von 3.0 gestoppt; die Reaktionsmischung wurde dann noch 10 Min. bei 95°C gehalten, anschließend auf Raumtemperatur abgekühlt, mit Natriumhydroxidlösung auf pH = 5.5 eingestellt und über Sterilschichten filtriert. Die leicht gelb gefärbte Abbaustärkelösung, 15.6 kg, mit einem Trockenmassegehalt von 22.4 %, wurde zur Entfernung niedermolekularer Bestandteile einer Diafiltration über eine Ultrafiltrationsmembran mit einer Abscheidegrenze von 30000 Dalton unterworfen, wobei 10.2 kg einer 19.6 %-igen Lösung, die 2.0 kg Abbau-Amylopektin enthält, erhalten wurden. Alquote Teile dieser Lösung wurden für die nachfolgenden Beispiele 2 und 3 eingesetzt.

### Beispiel 2

### Herstellung einer Acetylstärke (Mw ca. 200000 MS ca. 0.35)

Zu 826.5 g der nach Beispiel 1 erhaltenen Abbaustärkelösung, enthaltend 162 g Trockenmasse (1 Mol CH₆H₁₀O₅), wurden unter kräftiger Magnetrührung 40.8 g (0.40 Mol) Essigsäureanhydrid während einer Stunde gleichmäßig zudosiert und gleichzeitig mittels pH-Stat-Schaltung 2 N Natriumhydroxidlösung so zugegeben, daß ein pH-Wert zwischen 8.0 bis 8.5 aufrechterhalten wurde. Hierfür wurden 225 ml (0.45 Mol) verbraucht.

Die so erhaltene Lösung wurde über eine Ultrafiltrationsmembran (Ausschlußgrenze 30000 Dalton) bis zu einer Leitfähigkeit von < 1 micro S/cm diafiltriert. Nach Zusatz von 1.6 g Aktivkohle wurde die Lösung über Sterilschichten filtriert, im Vakuum zu einem dicken Sirup konzentriert und danach im Vakuumtrockenschrank zu einer spröden, weißen, blasigen Masse getrocknet. Nach dem Mahlen betrug die Ausbeute 165.0 g. Die molare Substitution wurde mit 0.355 Mol/Mol bestimmt. Die Substanz erwies sich bei der Prüfung am Kaninchen nach Ph.Eur. als pyrogenfrei und wurde von den Tieren reaktionslos vertragen.

### Beispiel 3

### Herstellung einer Acetylstärke (Mw ca. 200000, MS ca. 0.50)

Zu 826.5 g der nach Beispiel 1 erhaltenen Abbaustärkelösung, enthaltend 162 g Trockenmasse (1 Mol CH₆H₁₀O₅), wurden unter kräftiger Magnetrührung 64.85 g (0.635 Mol) Essigsäureanhydrid während zwei Stunden gleichmäßig zudosiert und gleichzeitig mittels pH-Stat-Schaltung 2 N Natriumhydroxidlösung so zugegeben, daß ein pH-Wert von 8.0 bis 8.5 aufrechterhalten wurde. Hierfür wurden 500 ml (1.0 Mol) verbraucht.

Die so erhaltene Lösung wurde über eine Ultrafiltrationsmembran (Ausschlußgrenze 30000 Dalton) bis zu einer Leitfähigkeit von < 1 micro S/cm diafiltriert. Nach Zusatz von 1.6 g Aktivkohle wurde die Lösung über Sterilschichten filtriert, im Vakuum zu einem dicken Sirup konzentriert und danach im Vakuumtrockenschrank zu einer spröden, weißen, blasigen Masse getrocknet. Nach dem Mahlen betrug die Ausbeute 166.4 g. Die molare Substitution wurde mit 0.502 Mol/Mol bestimmt. Die Substanz erwies sich bei der Prüfung am Kaninchen nach Ph.Eur. als pyrogenfrei und wurde von den Tieren reaktionslos vertragen.

### Anwendungsbeispiel

### Herstellung von Plasmaersatzlösungen

Als Stärkeester wurde eine erfindungsgemäße Acetylstärke mit einem mittleren Molekulargewicht (Mw) von ca. 200000 Dalton und mit einem Substitutionsgrad von 0.3 oder 0.5 eingesetzt.

Damit wurden die folgenden Plasmaersatzlösungen hergestellt:
1. Acetylstärkelösung in einer Konzentration von 3, 6 und 10 Gew.-% in physiologischer Kochsalzlösung (0.9 Gew.-%)
2. Acetylstärkelösung in einer Konzentration von 6 Gew.-% in 2.5 Gew.-%-iger Glycerinlösung (elektrolytfreie Plasmaersatzlösung)

### Untersuchungen zur biologischen Abbaubarkeit

Die vorstehend hergestellten Acetylstärkelösungen mit einer Konzentration von 3, 6 und 10 Gew.-% Acetylstärke (Substitutionsgrad 0.3 oder 0.5) in physiologischer Kochsalzlösung wurden Ratten intravenös verabreicht (18 ml in 3 Stunden).

Die Infusionen wurden sehr gut toleriert und es wurden keine unmittelbaren Nebenwirkungen festgestellt. Unmittelbar nach Beendigung der Infusionen waren in Abhängigkeit von der Dosis Blutspiegel von Acetylstärke vorhanden (6 bis 25 mg/ml). Diese Blutspiegel waren mit denen vergleichbar, die unter Verwendung von Hydroxyethylstärkelösungen (HES 200/0.5; Mw ca. 200000 Dalton, molare Substitution 0.5 Mol) erhalten wurden. Auch 3 Stunden nach Beendigung der Infusion war noch Acetylstärke im Blut der Tiere nachweisbar (1.0 bis 10 mg/ml); diese Mengen entsprachen ebenfalls den Mengen, die mit der Hydroxyethylstärkelösung (HES 200/0.5) unter vergleichbaren Bedingungen erhalten wurden. 24 Stunden nach Infusionsende war bei den behandelten Tieren jedoch keine Acetylstärke mehr im Blut nachweisbar.

Die Fig. 1 zeigt den Serumgehalt (in mg/ml), der nach drei-stündiger Infusion sofort nach Infusionsende (A bis E) bzw. 3 Stunden nach Infusionsende (F, G, H) festgestellt wurde.

Die Fig. 2 zeigt den Gehalt an Hydrokolloid in der Niere (in mg/g), der sofort nach Infusionsende (B, C, D, E und NaCl), 3 Stunden nach Infusionsende (F, G) und 18 bis 24 Stunden nach Infusionsende (I, J, K, L) festgestellt wurde.

Die Fig. 3 zeigt die entsprechenden Angaben gemäß Fig. 2 für die Lunge.

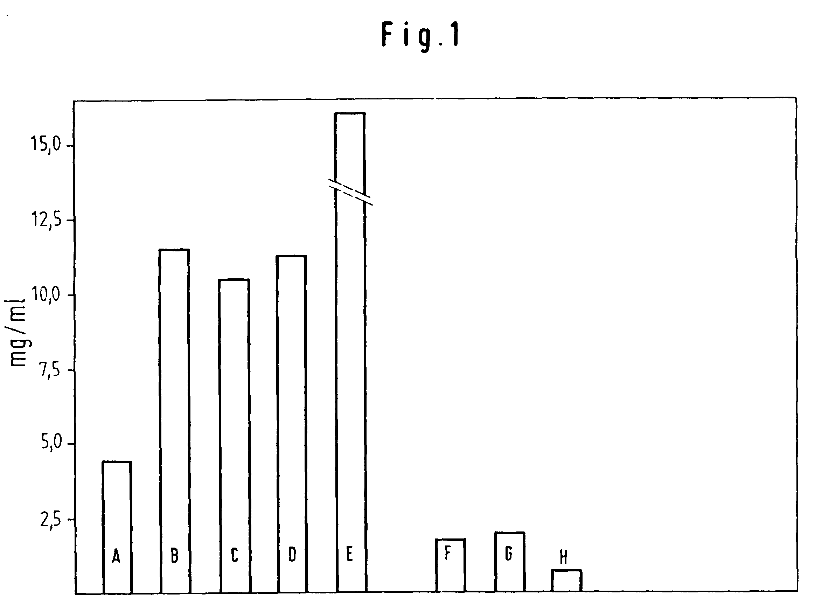

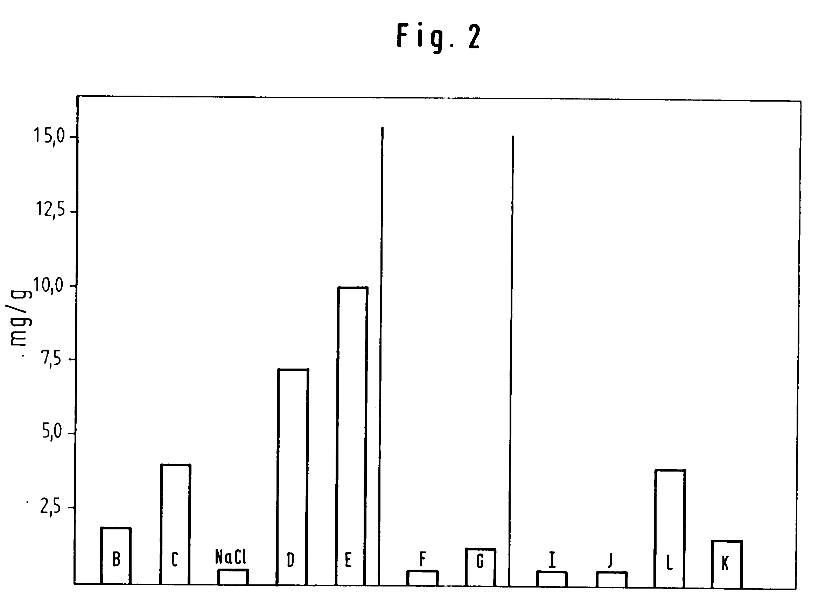

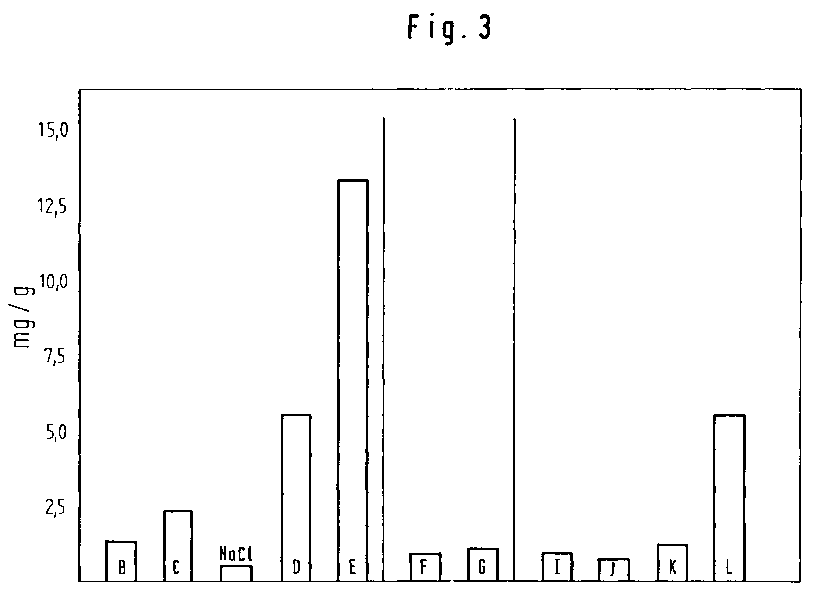

Die Angaben A bis L in den Fig. 1 bis 3 beziehen sich auf die folgenden Plasmaersatzlösungen:

A - 3 % Acetylstärke; B - 6 % Acetylstärke; C - 10 % Acetylstärke; D - 6 % HES 200/0.5; E - 10 % HES 200/0.5; F - 6 % Acetylstärke; G - 10 % Acetylstärke; H - 3 % Acetylstärke, I - 6 % Acetylstärke, J - 10 % Acetylstärke; K - 6 % HES 200/0.5; L - 10 % HES 200/0.5. NaCl = Natriumchlorid.

## Patentansprüche (Patentansprüche für folgende(n) Vertragsstaat(en): AT, BE, CH, DE, DK, FR, GB, IT, LI, LU, MC, NL, SE)

1. Verfahren zur Herstellung von wasserlöslichen, physiologisch verträglichen Stärkeesterzusammensetzungen,
**dadurch gekennzeichnet**,
daß man eine Stärke durch Säurehydrolyse oder Enzymhydrolyse in ein Teilhydrolysat mit einem mittleren Molekulargewicht Mw im Bereich von 10000 bis 500000 Dalton überführt, dieses Teilhydrolysat in wäßriger Lösung mit dem Anhydrid oder Halogenid einer aliphatischen Monocarbonsäure mit 2 bis 4 Kohlenstoffatomen oder einer aliphatischen Dicarbonsäure mit 3 bis 6 Kohlenstoffatomen oder Gemischen davon und einem Alkalisierungsmittel bis zu einer molaren Substitution im Bereich von 0.1 bis 1.0 Mol/Mol acyliert und aus dem so erhaltenen Reaktionsgemisch die Salze entfernt und vor und/oder nach der Acylierung niedermolekulare Bestandteile entfernt.

2. Verfahren nach Anspruch 1,
**dadurch gekennzeichnet**,
daß die eingesetzte Stärke aus praktisch amylosefreiem Amylopektin besteht.

3. Verfahren nach Anspruch 1 oder 2,
**dadurch gekennzeichnet**,
daß die Stärke Wachsmais-, Wachsreis oder Wachssorghumstärke ist.

4. Verfahren nach einem der Ansprüche 1 bis 3,
**dadurch gekennzeichnet**,
daß man die Stärke bis zu einem mittleren Molekulargewicht Mw im Bereich von 40000 bis 250000 Dalton hydrolysiert.

5. Verfahren nach einem der Ansprüche 1 bis 4,
**dadurch gekennzeichnet**,
daß man für eine Enzymhydrolyse α-Amylase einsetzt.

6. Verfahren nach einem der Ansprüche 1 bis 5,
**dadurch gekennzeichnet**,
daß man bis zu einer molaren Substitution von 0.3 bis 0.7 Mol/Mol acyliert.

7. Verfahren nach einem der Ansprüche 1 bis 6,
**dadurch gekennzeichnet**,
daß man als Anhydrid oder Halogenid einer Monocarbonsäure das von Essigsäure einsetzt.

8. Verfahren nach einem der Ansprüche 1 bis 6,
**dadurch gekennzeichnet**,
daß man als Anhydrid oder Halogenid einer Dicarbonsäure das von Bernsteinsäure oder Maleinsäure einsetzt.

9. Verfahren nach einem der Ansprüche 1 bis 8,
**dadurch gekennzeichnet**,
daß man als Alkalisierungsmittel Natriumhydroxid, Natriumcarbonat, Calciumhydroxid oder Magnesiumhydroxid einsetzt.

10. Verfahren nach einem der Ansprüche 1 bis 9,
**dadurch gekennzeichnet**,
daß man die Entfernung von Salzen und/oder von niedermolekularen Bestandteilen durch Dialyse, Ultrafiltration und/oder Ionenaustausch durchführt.

11. Stärkeesterzusammensetzung, wobei der Stärkeester, erhältlich nach einem Verfahren gemäß einem der Ansprüche 1 bis 10 ist.

12. Verwendung einer Stärkeesterszusammensetzung nach Anspruch 11 zur Herstellung von pharmazeutischen Zusammensetzungen für die klinische, insbesondere parenterale Anwendung oder von diätetischen Formulierungen.

## Patentansprüche (Patentansprüche für folgende(n) Vertragsstaat(en): ES, GR)

1. Verfahren zur Herstellung von wasserlöslichen, physiologisch verträglichen Stärkeesterzusammensetzungen,
**dadurch gekennzeichnet**,
daß man eine Stärke durch Säurehydrolyse oder Enzymhydrolyse in ein Teilhydrolysat mit einem mittleren Molekulargewicht Mw im Bereich von 10000 bis 500000 Dalton überführt, dieses Teilhydrolysat in wäßriger Lösung mit dem Anhydrid oder Halogenid einer aliphatischen Monocarbonsäure mit 2 bis 4 Kohlenstoffatomen oder einer aliphatischen Dicarbonsäure mit 3 bis 6 Kohlenstoffatomen oder Gemischen davon und einem Alkalisierungsmittel bis zu einer molaren Substitution im Bereich von 0.1 bis 1.0 Mol/Mol acyliert und aus dem so erhaltenen Reaktionsgemisch die Salze entfernt und vor und/oder nach der Acylierung niedermolekulare Bestandteile entfernt.

2. Verfahren nach Anspruch 1,
**dadurch gekennzeichnet**,
daß die eingesetzte Stärke aus praktisch amylosefreiem Amylopektin besteht.

3. Verfahren nach Anspruch 1 oder 2,
**dadurch gekennzeichnet**,
daß die Stärke Wachsmais-, Wachsreis oder Wachssorghumstärke ist.

4. Verfahren nach einem der Ansprüche 1 bis 3,
**dadurch gekennzeichnet**,
daß man die Stärke bis zu einem mittleren Molekulargewicht Mw im Bereich von 40000 bis 250000 Dalton hydrolysiert.

5. Verfahren nach einem der Ansprüche 1 bis 4,
**dadurch gekennzeichnet**,
daß man für eine Enzymhydrolyse α-Amylase einsetzt.

6. Verfahren nach einem der Ansprüche 1 bis 5,
**dadurch gekennzeichnet**,
daß man bis zu einer molaren Substitution von 0.3 bis 0.7 Mol/Mol acyliert.

7. Verfahren nach einem der Ansprüche 1 bis 6,
**dadurch gekennzeichnet**,
daß man als Anhydrid oder Halogenid einer Monocarbonsäure das von Essigsäure einsetzt.

8. Verfahren nach einem der Ansprüche 1 bis 6,
**dadurch gekennzeichnet**,
daß man als Anhydrid oder Halogenid einer Dicarbonsäure das von Bernsteinsäure oder Maleinsäure einsetzt.

9. Verfahren nach einem der Anspruch 1 bis 8,
**dadurch gekennzeichnet**,
daß man als Alkalisierungsmittel Natriumhydroxid, Natriumcarbonat, Calciumhydroxid oder Magnesiumhydroxid einsetzt.

10. Verfahren nach einem der Ansprüche 1 bis 9,
**dadurch gekennzeichnet**,
daß man die Entfernung von Salzen und/oder von niedermolekularen Bestandteilen durch Dialyse, Ultrafiltration und/oder Ionenaustausch durchführt.

11. Verwendung einer nach einem der vorhergehenden Ansprüche hergestellten Stärkeesterzusammensetzung zur Herstellung von pharmazeutischen Zusammensetzungen für die klinische, insbesondere parenterale Anwendung oder von diätetischen Formulierungen.

## Claims (Claims for the following Contracting State(s): AT, BE, CH, DE, DK, FR, GB, IT, LI, LU, MC, NL, SE)

1. Process for the production of water-soluble,
physiologically compatible starch ester compositions,
**wherein**
a starch is converted by acid hydrolysis or enzyme hydrolysis into a partial hydrolysate with an average molecular weight Mw in the range 10000 to 500000 Daltons, this partial hydrolysate is acylated in aqueous solution with the anhydride or halogenide of an aliphatic monocarboxylic acid with 2 to 4 carbon atoms or an aliphatic dicarboxylic acid with 3 to 6 carbon atoms or mixtures thereof and an alkalisation agent up to a molar substitution in the range 0.1 to 1.0 mol/mol and the salts are removed from the reaction mixture obtained in this way and low molecular components are removed before and/or after the acylation.

2. Process as claimed in claim 1,
**wherein**
the starch used is composed of virtually amylose-free amylopectin.

3. Process as claimed in claim 1 or 2,
**wherein**
the starch is wax corn, wax rice or wax sorghum starch.

4. Process as claimed in one of the claims 1 to 3,
**wherein**
the starch is hydrolysed until the average molecular weight Mw is in the range 40000 to 250000 Daltons.

5. Process as claimed in one of the claims 1 to 4,
**wherein**
α-amylase is used for enzyme hydrolysis.

6. Process as claimed in one of the claims 1 to 5,
**wherein**
it is acylated until the molar substitution is 0.3 to 0.7 mol/mol.

7. Process as claimed in one of the claims 1 to 6,
**wherein**
an anhydride or halogenide of acetic acid is used as the anhydride or halogenide of a monocarboxylic acid.

8. Process as claimed in one of the claims 1 to 6,
**wherein**
an anhydride or halogenide of succinic acid or maleic acid is used as the anhydride or halogenide of a dicarboxylic acid.

9. Process as claimed in one of the claims 1 to 8,
**wherein**
sodium hydroxide, sodium carbonate, calcium hydroxide or magnesium hydroxide is used as the alkalisation agent.

10. Process as claimed in one of the claims 1 to 9,
**wherein**
salts and/or low molecular components are removed by dialysis, ultrafiltration and/or ion exchange.

11. Starch ester composition, wherein the starch ester is obtainable according to a process as claimed in one of the claims 1 to 10.

12. Use of a starch ester composition as claimed in claim 11 for the production of pharmaceutical compositions for clinical and in particular parenteral application or of dietary formulations.

## Claims (Claims for the following Contracting State(s): ES, GR)

1. Process for the production of water-soluble, physiologically compatible starch esters,
**wherein**
a starch is converted by acid hydrolysis or enzyme hydrolysis into a partial hydrolysate with an average molecular weight Mw in the range 10000 to 500000 Daltons, this partial hydrolysate is acylated in aqueous solution with the anhydride or halogenide of an aliphatic monocarboxylic acid with 2 to 4 carbon atoms or an aliphatic dicarboxylic acid with 3 to 6 carbon atoms or mixtures thereof and an alkalisation agent up to a molar substitution in the range 0.1 to 1.0 mol/mol and the salts are removed from the reaction mixture obtained in this way and low molecular components are removed before and/or after the acylation.

2. Process as claimed in claim 1,
**wherein**
the starch used is composed of virtually amylose-free amylopectin.

3. Process as claimed in claim 1 or 2,
**wherein**
the starch is wax corn, wax rice or wax sorghum starch.

4. Process as claimed in one of the claims 1 to 3,
**wherein**
the starch is hydrolysed until the average molecular weight Mw is in the range 40000 to 250000 Daltons.

5. Process as claimed in one of the claims 1 to 4,
**wherein**
α-amylase is used for enzyme hydrolysis.

6. Process as claimed in one of the claims 1 to 5,
**wherein**
it is acylated until the molar substitution is 0.3 to 0.7 mol/mol.

7. Process as claimed in one of the claims 1 to 6,
**wherein**
an anhydride or halogenide of acetic acid is used as the anhydride or halogenide of a monocarboxylic acid.

8. Process as claimed in one of the claims 1 to 6,
**wherein**
an anhydride or halogenide of succinic acid or maleic acid is used as the anhydride or halogenide of a dicarboxylic acid.

9. Process as claimed in one of the claims 1 to 8,
**wherein**
sodium hydroxide, sodium carbonate, calcium hydroxide or magnesium hydroxide is used as the alkalisation agent.

10. Process as claimed in one of the claims 1 to 9,
**wherein**
salts and/or low molecular components are removed by dialysis, ultrafiltration and/or ion exchange.

11. Use of a starch ester as claimed in one of the previous claims for the production of pharmaceutical compositions for clinical and in particular parenteral application or of dietary formulations.

## Revendications (Revendications pour l'(les) Etat(s) contractant(s) suivant(s): AT, BE, CH, DE, DK, FR, GB, IT, LI, LU, MC, NL, SE)

1. Procédé pour la préparation de compositions d'ester d'amidon hydrosolubles, physiologiquement compatibles, caractérisé en ce que l'on transforme un amidon par hydrolyse acide ou hydrolyse enzymatique en un hydrolysat partiel avec un poids moléculaire moyen dans la plage de 10 000 à 500 000 Daltons, en ce que l'on acyle cet hydrolysat partiel en solution aqueuse avec l'anhydride ou halogénure d'un acide monocarboxylique aliphatique avec 2 jusqu'à 4 atomes de carbone ou un acide dicarboxylique aliphatique avec 3 jusqu'à 6 atomes de carbone ou des mélanges de ceux-ci et un agent d'alcalisation jusqu'à une substitution molaire dans la plage de 0,1 à 1,0 mole/mole et à partir du mélange réactionnel ainsi obtenu, on élimine les sels et avant et/ou après l'acylation, on élimine les composants à faible poids moléculaire.

2. Procédé selon la revendication 1,
caractérisé en ce que l'amidon mis en oeuvre est constitué d'amylopectine pratiquement exempte d'amylose.

3. Procédé selon la revendication 1 ou 2,
caractérisé en ce que l'amidon est de l'amidon de maïs cireux, de riz cireux ou de sorgho cireux.

4. Procédé selon l'une des revendications 1 à 3,
caractérisé en ce que l'on hydrolyse l'amidon jusqu'à un poids moléculaire moyen dans la plage de 40 000 à 250 000 Daltons.

5. Procédé selon l'une des revendications 1 à 4,
caractérisé en ce que pour l'hydrolyse enzymatique, on met en oeuvre une α-amylase.

6. Procédé selon l'une des revendications 1 à 5,
caractérisé en ce que l'on acyle jusqu'à une substitution molaire de 0,3 à 0,7 mole/mole.

7. Procédé selon l'une des revendications 1 à 6,
caractérisé en ce que l'on utilise comme anhydride ou halogénure d'un acide monocarboxylique, celui de l'acide acétique.

8. Procédé selon l'une des revendications 1 à 6,
caractérisé en ce que l'on utilise comme anhydride ou halogénure d'un acide dicarboxylique, celui de l'acide succinique ou de l'acide maléique.

9. Procédé selon l'une des revendications 1 à 8,
caractérisé en ce qu'en tant qu'agent d'alcalisation, on utilise l'hydroxyde de sodium, le carbonate de sodium, l'hydroxyde de calcium ou l'hydroxyde de magnésium.

10. Procédé selon l'une des revendications 1 à 9,
caractérisé en ce que l'on effectue la séparation des sels et/ou des composants à faible poids moléculaire par dialyse, ultrafiltration et/ou échange ionique.

11. Composition d'ester d'amidon, l'ester d'amidon étant obtenu selon un procédé décrit dans les revendications 1 à 10.

12. Utilisation d'une composition d'ester d'amidon selon la revendication 11, pour la préparation de compositions pharmaceutiques pour l'utilisation clinique, en particulier parentérale ou de formulation diététique.

## Revendications (Revendications pour l'(les) Etat(s) contractant(s) suivant(s): ES, GR)

1. Procédé pour la préparation d'esters d'amidon hydrosolubles, physiologiquement compatibles, caractérisé en ce que l'on transforme un amidon par hydrolyse acide ou hydrolyse enzymatique en un hydrolysat partiel avec un poids moléculaire moyen Mw dans la plage de 10.000 à 500.000 Daltons, que l'on acyle cet hydrolysat partiel en solution aqueuse avec l'anhydride ou l'halogénure d'un acide monocarboxylique aliphatique avec 2 jusqu'à 4 atomes de carbone ou d'un acide dicarboxylique aliphatique avec 3 jusqu'à 6 atomes de carbone ou avec des mélanges de ceux-ci et un agent d'alcalinisation jusqu'à une substitution molaire dans la plage de 0,1 à 1,0 mole/mole, que l'on élimine les sels à partir du mélange réactionnel ainsi obtenu et élimine les composants de faible poids moléculaire avant et/ou après l'acylation.

2. Procédé selon la revendication 1, caractérisé en ce que l'amidon mis en oeuvre est constitué par de l'amylopectine pratiquement exempte d'amylose.

3. Procédé selon la revendication 1 ou 2, caractérisé en ce que l'amidon est de l'amidon de maïs cireux, de riz cireux ou de sorgho cireux.

4. Procédé selon l'une des revendications 1 à 3,
caractérisé en ce que l'on hydrolyse l'amidon jusqu'à un poids moléculaire moyen Mw dans la plage de 40.000 à 250.000 Daltons.

5. Procédé selon l'une des revendications 1 à 4,
caractérisé en ce que, pour l'hydrolyse enzymatique, on met en oeuvre une α-amylase.

6. Procédé selon l'une des revendications 1 à 5,
caractérisé en ce que l'on acyle jusqu'à une substitution molaire de 0,3 à 0,7 mole/mole.

7. Procédé selon l'une des revendications 1 à 6,
caractérisé en ce que l'on utilise comme anhydride ou halogénure d'un acide monocarboxylique, celui de l'acide acétique.

8. Procédé selon l'une des revendications 1 à 6,
caractérisé en ce que l'on utilise comme anhydride ou halogénure d'un acide dicarboxylique, celui de l'acide succinique ou de l'acide maléique.

9. Procédé selon l'une des revendications 1 à 8,
caractérisé en ce qu'on utilise en tant qu'agent d'alcalinisation, l'hydroxyde de sodium, le carbonate de sodium, l'hydroxyde de calcium ou l'hydroxyde de magnésium.

10. Procédé selon l'une des revendications 1 à 9,
caractérisé en ce que l'on effectue la séparation des sels et/ou des composants de faible poids moléculaire par dialyse, ultrafiltration et/ou échange d'ions.

11. Utilisation d'un ester d'amidon préparé selon l'une des revendications précédentes pour la préparation de compositions pharmaceutiques pour l'utilisation clinique, en particulier parentérale ou de formulations diététiques.
